# EUROPEAN PATENT SPECIFICATION

(11) **EP 4 373 667 B1**
(45) Date of publication and mention of the grant of the patent: **27.08.2025**
(21) Application number: 22754733.8
(22) Date of filing: 19.07.2022
(51) Int. Cl.: H01M 10/658, B32B 7/06, H01M 50/124, B32B 27/28, B32B 27/12, B32B 7/12, B32B 5/02, B32B 5/26, H01M 50/209, H01M 50/227, H01M 50/231, H01M 50/24, H01M 50/249

(54) **THERMAL AND DIELECTRIC INSULATOR FOR A BATTERY PACK**
THERMISCHER UND DIELEKTRISCHER ISOLATOR FÜR EIN BATTERIEPACK
ISOLANT THERMIQUE ET DIÉLECTRIQUE POUR BLOC-BATTERIE

(30) Priority: 19.07.2021 US 202163223481 P; 15.07.2022 US 202217866316
(43) Date of publication of application: 29.05.2024
(73) Proprietor: Federal-Mogul Powertrain LLC, Southfield, MI 48034 (US)
(72) Inventor: FUKUYAMA, Shozo, Tokyo, Tokyo 192-0081 (JP); ITOH, Emi, Kawasaki-shi Kanagawa-ken, Kanagawa 215--0025 (JP)
(74) Representative: HGF
(86) International application number: PCT/US2022/073866
(87) International publication number: WO 2023/004298

(56) References cited:
- WO-A1-2020/019114
- WO-A1-2020/047846
- US-A1- 2021 074 960

## Description

### CROSS-REFERENCE TO RELATED APPLICATION

This application claims the benefit of U.S. Provisional Application Serial No. 63/223,481, filed July 19, 2021, and priority to U.S. Application Serial No. 17/866,316, filed July 15, 2022 which are incorporated herein by reference in their entirety.

### BACKGROUND OF THE INVENTION

### 1. Technical Field

This invention relates generally to thermal and dielectric insulators, and more particularly to thermal and dielectric insulators for inhibiting flame propagation within and from a battery pack.

### 2. Related Art

It is known to contain or shield battery packs, including those used in electric vehicle applications, in thermal insulation. A common material used to form such thermal insulation is a fiberglass fabric. Although the fiberglass fabric insulation provides an acceptable level of protection against contamination and environmental temperatures during normal use, the fiberglass fabric insulation does not provide a desired level of protection against flame propagation outwardly from the battery pack or between cells of the battery pack, such as may be experienced in a thermal runaway condition of one or more cells of the electric vehicle battery pack. It is desired to provide a thermal insulation that also offers dielectric protection to the battery pack, while inhibiting the propagation of flame from the battery pack and between cells of the battery pack.

WO 2020/019114 A1 discloses a multilayer thermal insulator for an electric vehicle battery pack, comprising a structure comprising a non-woven core layer comprising non-meltable, flame-resistant polymeric fibers having opposite first and second major surfaces; and one or more scrims disposed on opposing major surfaces of the non-woven core layer. A layer of pressure sensitive adhesive may extend across and contact one or both scrims, or any other outward-facing surface of the thermal insulator.

### SUMMARY OF THE INVENTION

It is an object of the present disclosure to provide a thermal insulator for use with an electric vehicle battery pack that addresses at least the desire to inhibit the propagation of flame from the battery pack and between cells of the battery pack.

It is a further object to inhibit the propagation of flame from the battery pack and between cells of the battery pack for 5 minutes at a temperature of 1000 °C.

It is a further object to inhibit the propagation of flame from the battery pack and between cells of the battery pack for upwards to 10 minutes at a temperature of 1000 °C.

It is a further object of the present disclosure to provide a thermal insulator for use with an electric vehicle battery pack that addresses at least the desire to provide dielectric protection to the battery pack and between cells of the battery pack.

It is a further object of the present disclosure to provide a thermal insulator for use with an electric vehicle battery pack that is flexible to facilitate conformability of the thermal insulator about the battery pack and between cells of the battery pack.

It is a further object of the present disclosure to facilitate the ease installation of a thermal insulator about the battery pack and between cells of the battery pack.

It is a further object of the present disclosure to provide a thermal insulator for an electric vehicle battery pack that is lightweight, that has a low profile to minimize the amount of space occupied by the thermal insulator, and that is economical in manufacture and in use.

One aspect of the invention provides a thermal insulator for an electric vehicle battery pack having a wall including a scrim reinforced, polyether ether ketone layer, a first pressure sensitive adhesive layer coated on a side of the scrim reinforced, polyether ether ketone layer, and a silica fabric bonded to the pressure sensitive adhesive.

In accordance with another aspect of the invention, a second pressure sensitive adhesive layer can be bonded on the silica fabric to facilitate fixing the thermal insulator in the desired location.

In accordance with another aspect of the invention, a release film can be releasably fixed to the first pressure sensitive adhesive layer, with the release film being configured to be removed to expose the underlying first pressure sensitive adhesive layer for fixation to a surface of electric vehicle battery pack and/or to a housing thereof.

In accordance with another aspect of the invention, the first pressure sensitive adhesive layer and the second pressure sensitive adhesive layer can be provided as an acrylic pressure sensitive adhesive.

In accordance with another aspect of the invention, the wall prevents flame propagation when exposed to 1000 °C for 10 minutes.

In accordance with another aspect of the invention, the wall has an electrical insulation resistance of 4000Mohm or greater before and after being exposed to 1000 °C for 10 minutes.

In accordance with another aspect of the invention, the wall has a maximum thickness of 5mm, thereby having a low profile to enhance design options and reduce weight.

In accordance with another aspect of the invention, the wall has a maximum thickness of 2mm, thereby having a minimized profile to enhance design options and minimize weight.

In accordance with another aspect of the invention, the wall has a dielectric strength of 2kV after being exposed to 1000 °C for 10 minutes.

In accordance with another aspect of the invention, a flexible thermal insulator for an electric vehicle battery pack has a composite wall including a sheet of silica fabric having opposite first and second sides, and a first pressure sensitive adhesive layer bonded to the first side of the sheet of silica fabric.

In accordance with another aspect of the invention, a flexible thermal insulator for an electric vehicle battery pack is provided having a composite wall including a sheet of flame-resistant material having opposite first and second sides. A first pressure sensitive adhesive layer is bonded to the first side of the sheet of flame-resistant material. Further, one of a scrim reinforced, polyether ether ketone layer is bonded to the second side of the flame-resistant material, or a silicone rubber layer is bonded to the second side of the flame-resistant material.

In accordance with another aspect of the invention, a second pressure sensitive adhesive layer can be bonded to the scrim reinforced, polyether ether ketone layer.

In accordance with another aspect of the invention, a release film can be releasably fixed to the first pressure sensitive adhesive layer, with the release film being configured to be removed to expose the underlying first pressure sensitive adhesive layer for fixation to a surface of electric vehicle battery pack and/or to a housing thereof.

In accordance with another aspect of the invention, the first pressure sensitive adhesive layer and the second pressure sensitive adhesive layer can be provided as an acrylic pressure sensitive adhesive.

In accordance with another aspect of the invention, the composite wall prevents flame propagation when exposed to 1000 °C for 10 minutes.

In accordance with another aspect of the invention, the composite wall has an electrical insulation resistance of 4000Mohm or greater before and after being exposed to 1000 °C for 10 minutes.

In accordance with another aspect of the invention, the composite wall has a maximum thickness of 5mm.

In accordance with another aspect of the invention, the composite wall has a maximum thickness of 2mm.

In accordance with another aspect of the invention, the composite wall has a dielectric strength of 2kV after being exposed to 1000 °C for 10 minutes.

In accordance with another aspect of the invention, the composite wall of the flexible thermal insulator includes a silicone layer bonded to the second side of the sheet of silica fabric.

In accordance with another aspect of the invention, an electric vehicle battery pack is provided. The electric vehicle battery pack includes a housing bounding a plurality of cells. Further, a composite wall overlies the plurality of cells. The composite wall includes: a sheet of silica fabric having opposite first and second sides and a first pressure sensitive adhesive layer bonded to the first side of the sheet of silica fabric.

In accordance with another aspect of the invention, the electric vehicle battery pack can further include a second pressure sensitive adhesive layer bonded to the scrim reinforced, polyether ether ketone layer.

In accordance with another aspect of the invention, the electric vehicle battery pack can further include a release film releasably fixed to the first pressure sensitive adhesive layer, with the release film being configured to be removed to expose the underlying first pressure sensitive adhesive layer for operable fixation to a surface of the housing.

In accordance with another aspect of the invention, the first pressure sensitive adhesive layer and the second pressure sensitive adhesive layer of the electric vehicle battery pack can be provided as an acrylic pressure sensitive adhesive.

In accordance with another aspect of the invention, the composite wall of the electric vehicle battery pack prevents flame propagation when exposed to 1000 °C for 10 minutes.

In accordance with another aspect of the invention, the composite wall of the electric vehicle battery pack has an electrical insulation resistance of 4000Mohm or greater before and after being exposed to 1000 °C for 10 minutes.

In accordance with another aspect of the invention, the composite wall of the electric vehicle battery pack has a maximum thickness of 5mm.

In accordance with another aspect of the invention, the composite wall of the electric vehicle battery pack has a maximum thickness of 2mm.

In accordance with another aspect of the invention, the composite wall of the electric vehicle battery pack has a dielectric strength of 2kV after being exposed to 1000 °C for 10 minutes.

In accordance with another aspect of the invention, the composite wall of the electric vehicle battery pack further includes a silicone layer bonded to the second side of the sheet of flame-resistant material, wherein the flame-resistant material is a silica fabric.

In accordance with another aspect of the invention, the silica fabric is woven from silica multifilament yarns.

### BRIEF DESCRIPTION OF THE DRAWINGS

These and other aspects, features and advantages will become readily apparent to those skilled in the art in view of the following detailed description of presently preferred embodiments and best mode, appended claims, and accompanying drawings, in which:
Figure 1 is a schematic perspective view of an electric motor vehicle having a battery pack with a plurality of thermal insulators constructed in accordance with an aspect of the invention;

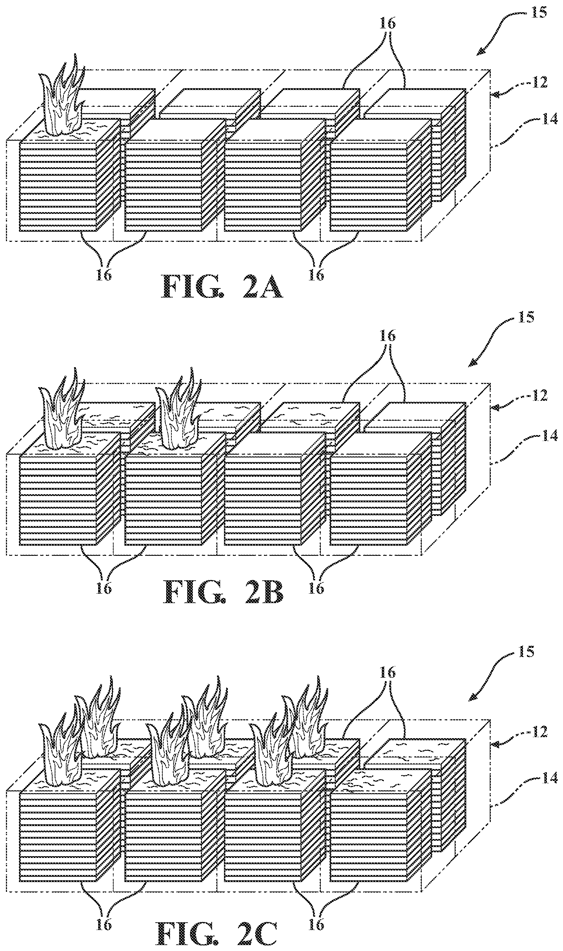

Figures 2A-2C illustrate a schematic representation of a plurality of cells in an electric vehicle battery pack, without thermal insulators in accordance with the invention, undergoing a thermal runaway condition with a flame propagating without hindrance from a location of flame initiation (Figure 2A) throughout the battery pack (Figure 2C);

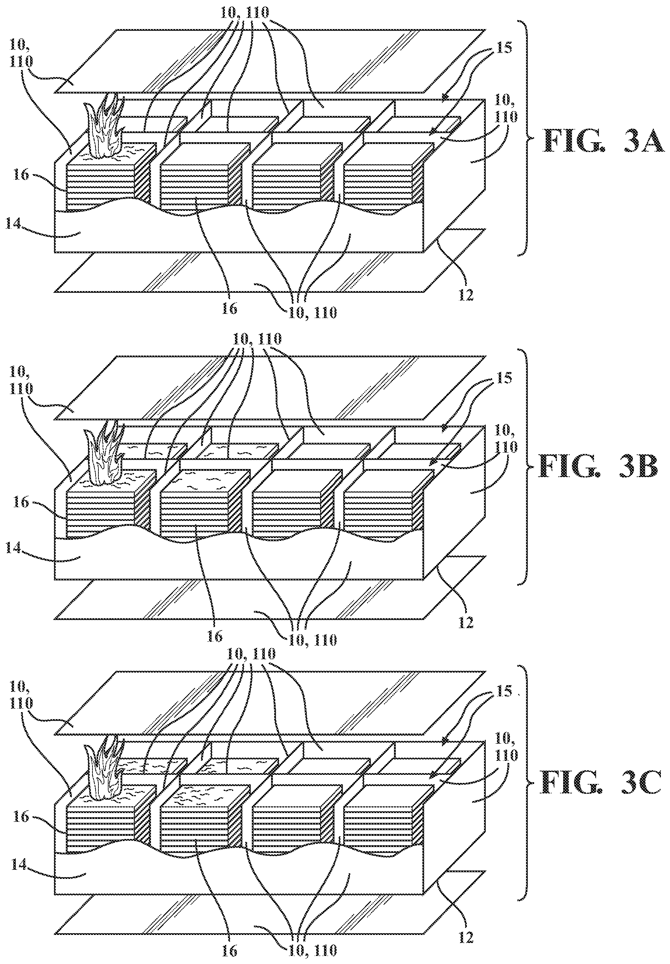

Figures 3A-3C are views similar to Figures 2A-2C, with the battery pack including the plurality of thermal insulators, with the thermal insulators shown suppressing and inhibiting flame propagating from a location of a thermal runaway condition (Figure 3A) throughout the battery pack (Figure 3C);
Figure 4 is a schematic perspective view of a thermal insulator in accordance with one embodiment of the disclosure;
Figure 4A is a graph illustrating a housing surface temperature of a battery pack including the thermal insulator of Figure 4, with the battery pack being exposed to 1000 °C for 10 minutes;
Figure 5 is a schematic perspective view of a thermal insulator in accordance with another embodiment of the disclosure; and
Figure 5A is a graph illustrating a housing surface temperature of a battery pack including the thermal insulator of Figure 5, with the battery pack being exposed to 1000 °C for 10 minutes.

### DETAILED DESCRIPTION OF PREFERRED EMBODIMENTS

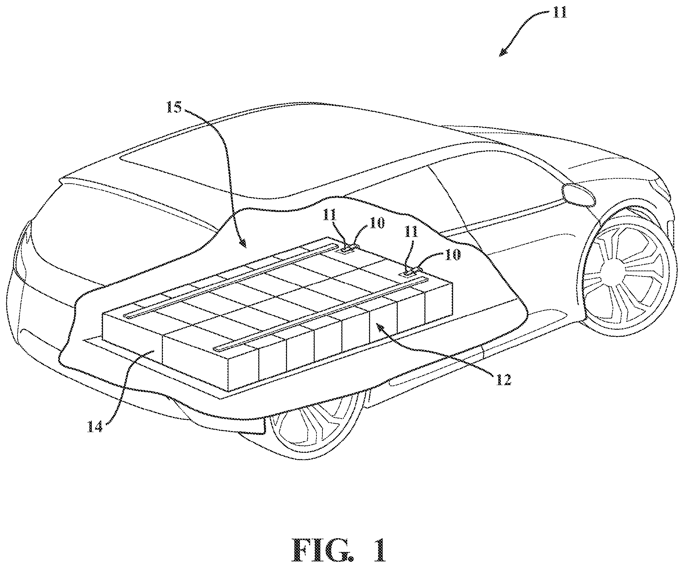

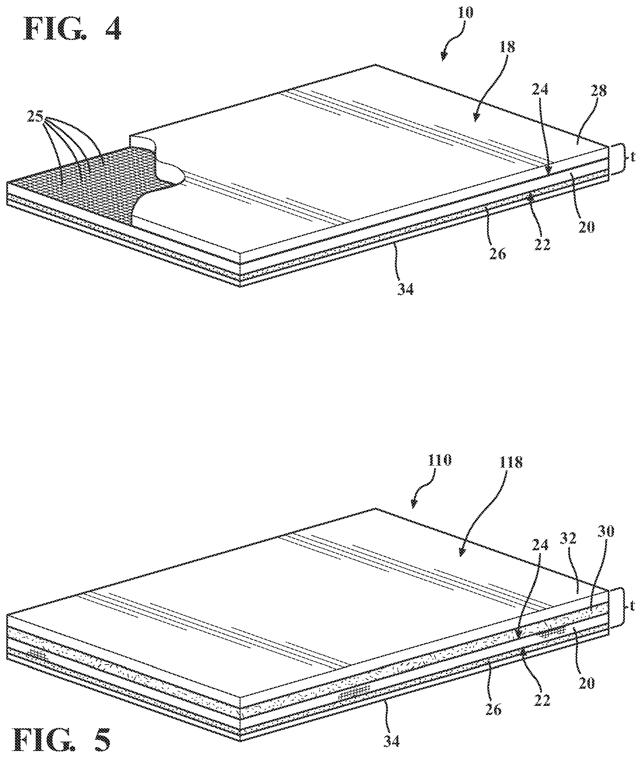

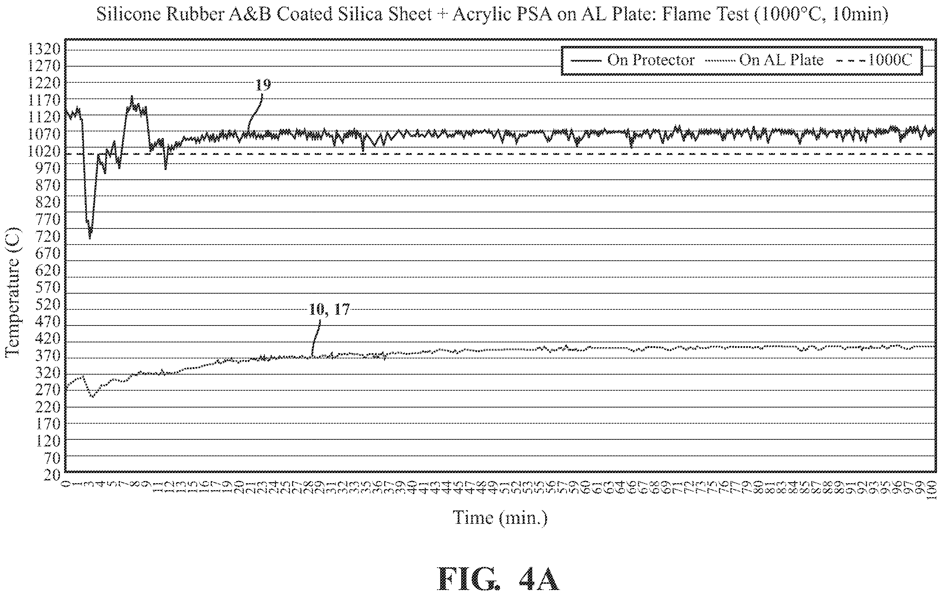

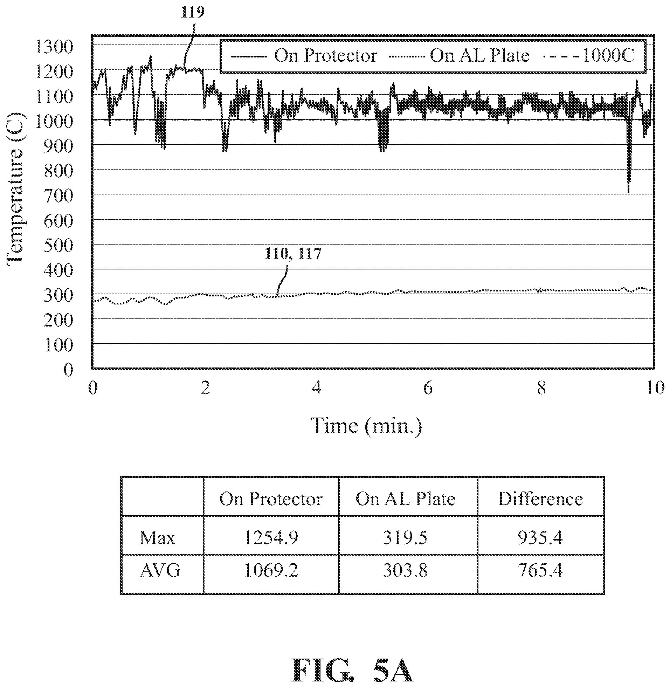

Referring in more detail to the drawings, Figure 1 illustrates a motor vehicle, shown as an electrically powered motor vehicle, also referred to as electric vehicle 11, having a battery pack 12, such as a lithium-ion battery pack, configured with at least one, and shown as a plurality of thermal insulators 10 in accordance with an aspect of the invention. The electric vehicle battery pack 12 includes a housing 14 comprising a plurality of battery modules 15, with each battery module 15 bounding a plurality of cells 16. During normal use, and including in non-normal situations, such as in a vehicle crash condition or some other condition causing an impact force to battery pack 12, a thermal runaway condition originating in any one of the cells 16 is controlled and contained via the thermal insulator 10, such that flame propagation (spread) between cells 16 and outwardly from the battery pack 12 is prevented for at least 10 minutes, and an outer surface temperature of the battery housing 14, also referred to as case, is maintained to be less than 500 °C, as evidenced in testing performed at a temperature of 1000 °C for 10 minutes (Figure 4A illustrating the outer surface temperature 17 for a first embodiment of the thermal insulator 10 constructed in accordance with one aspect of the disclosure while exposed to a temperature indicated at 19 of 1000 °C for 10 minutes and Figure 5A illustrating the outer surface temperature 117 for a second embodiment of a thermal insulator 110 constructed in accordance with another aspect of the disclosure while exposed to a temperature indicated at 119 of 1000 °C for 10 minutes, with the different thermal insulators 10, 100 being discussed in further detail below).

As shown schematically in Figure 4, the thermal insulator 10 includes a generally planar composite sheet, also referred to as composite wall, laminated wall or wall 18, which overlies the plurality of the cells 16 and extends between the cells 16 to effectively insulate each cell 16 from an adjacent cell 16. The composite wall 18 includes a sheet of insulating fabric 20 having opposite first and second sides 22, 24. The insulating fabric 20 is formed of a flame-resistant material, such as a tightly woven flame-resistant filaments (also referred to as multifilament yarns), and in one preferred embodiment, insulating fabric 20 is formed entirely from tightly interlaced silica multifilament yarns 25, wherein the multifilament yarns 25 are preferably woven using a tight plain weave pattern for maximum density. Further, a first pressure sensitive adhesive layer 26 can be bonded to the first side 22 of the sheet of silica fabric 20 to facilitate fixation of the composite wall 18 to the desire surface of the battery pack 12, including between adjacent cells 16 and/or about an inner and/or outer surface of the housing 14. Further, a silicone rubber layer 28 is coated or otherwise bonded to the second side 24 of the sheet of silica fabric 20. The silicone rubber layer 28 is a fluid impervious layer, thereby enhancing protection against the ingress of contamination, while greatly enhancing the flame-resistant properties of the wall 18, thereby further inhibiting flame propagation outwardly from and between adjacent cells 16, thereby extending the useful life of the battery pack 12 during an emergency situation.

In accordance with another aspect of the invention, a composite wall 118 of the thermal insulator 110 of the electric vehicle battery pack 12, as shown in Figure 5, in lieu of the silicone rubber layer 28, as discussed above for thermal insulator 10, can further include a second pressure sensitive adhesive layer 30 bonded to the second side 24 of the woven sheet of silica fabric 20 and further include a scrim reinforced, polyether ether ketone layer 32 bonded to the second pressure sensitive adhesive layer 30, such that the second pressure sensitive adhesive layer 30 is sandwiched between the second side 24 of the sheet of silica fabric 20 and the scrim reinforced, polyether ether ketone layer 32.

In accordance with another aspect of the invention, the electric vehicle battery pack can further include a release film 34 releasably fixed to the first pressure sensitive adhesive layer 26, with the release film 34 being configured to be removed to expose the underlying first pressure sensitive adhesive layer 26 for operable fixation to a surface of the respective cell 16 and housing 14.

In accordance with another aspect of the invention, the first pressure sensitive adhesive layer 26 and the second pressure sensitive adhesive layer 30 of the electric vehicle battery pack 12 can be provided as an acrylic pressure sensitive adhesive.

In accordance with another aspect of the invention, the composite wall 18, 118 of the electric vehicle battery pack 12 prevents flame propagation when exposed to 1000 °C for 10 minutes.

In accordance with another aspect of the invention, the composite wall 18, 118 of the electric vehicle battery pack 12 has an electrical insulation resistance of 4000Mohm or greater before and after being exposed to 1000 °C for 10 minutes.

In accordance with another aspect of the invention, the composite wall 18, 118 of the electric vehicle battery pack 12 has a maximum thickness (t) of 5mm.

In accordance with another aspect of the invention, the composite wall 18, 118 of the electric vehicle battery pack 12 has a maximum thickness (t) of 2mm.

In accordance with another aspect of the invention, the composite wall 18, 118 of the electric vehicle battery pack 12 has a dielectric strength of 2kV after being exposed to 1000 °C for 10 minutes.

Obviously, many modifications and variations of the present invention are possible in light of the above teachings. It is contemplated that all features of all claims and of all embodiments can be combined with each other, so long as such combinations would not contradict one another. It is, therefore, to be understood that within the scope of the appended claims, the invention may be practiced otherwise than as specifically described.

## Claims

1. A flexible thermal insulator (10; 110) for an electric vehicle battery pack (12), the flexible thermal insulator comprising a composite wall (18; 118) including a sheet of flame-resistant material (20) having opposite first and second sides (20, 24),
**characterised in that** said wall (18;118) further includes:
a first pressure sensitive adhesive layer (26) bonded to said first side (22) of said sheet of flame-resistant material (20); and
one of a scrim reinforced, polyether ether ketone layer (32) bonded to said second side (24) said flame-resistant material (20), or a silicone rubber layer (28) bonded to said second side of said flame-resistant material (20).

2. The flexible thermal insulator (110) of claim 1, further including a second pressure sensitive adhesive layer (30) bonded said scrim reinforced, polyether ether ketone layer (32).

3. The flexible thermal insulator (110) of claim 2, further including a release film (34) releasably fixed to said first pressure sensitive adhesive layer (26), said release film (34) being configured to be removed to expose the underlying first pressure sensitive adhesive layer (26) for fixation to a surface of the electric vehicle battery pack (12).

4. The flexible thermal insulator (110) of claim 3, wherein said first pressure sensitive adhesive layer (26) and said second pressure sensitive adhesive layer (30) are an acrylic pressure sensitive adhesive.

5. The flexible thermal insulator (10; 110) of claim 1, wherein said wall (18; 118) prevents flame propagation when exposed to 1000 °C for 10 minutes.

6. The flexible thermal insulator (10; 110) of claim 1, wherein said wall (18; 118) has an electrical insulation resistance of 4000Mohm or greater before and after being exposed to 1000 °C for 10 minutes.

7. The flexible thermal insulator (10; 110) of claim 1, wherein said wall (18; 118) has a maximum thickness of 5mm.

8. The flexible thermal insulator (10; 110) of claim 7, wherein said wall (18; 118) has a maximum thickness of 2mm.

9. The flexible thermal insulator (10; 110) of claim 1, wherein said wall (18; 118) has a dielectric strength of 2kV after being exposed to 1000 °C for 10 minutes.

10. The flexible thermal insulator of claim 1, wherein said sheet of flame resistant material (20) is a silica fabric.

11. The flexible thermal insulator of claim 10, wherein said silica fabric is a woven sheet of silica multifilament yarns.

12. An electric vehicle battery pack (12) comprising:
a housing (14);
a plurality of cells (16) bounded by said housing (14); and
a plurality of composite walls (18;118), each of said composite walls (18; 118) provided by the flexible thermal insulator (10; 110) of any preceding claim,
wherein said at least some of said composite walls (18; 118) separate adjacent ones of said cells (16) from one another.

## Patentansprüche

1. Flexibler thermischer Isolator (10; 110) für ein Batteriepack (12) eines Elektrofahrzeugs, wobei der flexible thermische Isolator eine Verbundwand (18; 118) umfasst, die ein Tuch aus feuerbeständigem Material (20) mit gegenüberliegenden ersten und zweiten Seiten (20, 24) beinhaltet,
**dadurch gekennzeichnet, dass** die Wand (18;118) ferner Folgendes beinhaltet:
eine erste druckempfindliche Klebstoffschicht (26), die an die erste Seite (22) von dem Tuch aus feuerbeständigem Material (20) gebunden ist; und
eine von einer gewebeverstärkten Polyetheretherketonschicht (32), die an die zweite Seite (24) des feuerbeständigen Materials (20) gebunden ist, oder einer Silikonkautschukschicht (28), die an die zweite Seite des feuerbeständigen Materials (20) gebunden ist.

2. Flexibler thermischer Isolator (110) nach Anspruch 1, ferner beinhaltend eine zweite druckempfindliche Klebstoffschicht (30), die an die gewebeverstärkte Polyetheretherketonschicht (32) gebunden ist.

3. Flexibler thermischer Isolator (110) nach Anspruch 2, ferner beinhaltend eine Trennfolie (34), die lösbar an der ersten druckempfindlichen Klebeschicht (26) befestigt ist, wobei die Trennfolie (34) dazu konfiguriert ist, entfernt zu werden, um die darunter liegende erste druckempfindliche Klebeschicht (26) zur Befestigung an einer Oberfläche des Batteriepacks (12) des Elektrofahrzeugs auszusetzen.

4. Flexibler thermischer Isolator (110) nach Anspruch 3, wobei die erste druckempfindliche Klebstoffschicht (26) und die zweite druckempfindliche Klebstoffschicht (30) ein druckempfindlicher Acrylklebstoff sind.

5. Flexibler thermischer Isolator (10; 110) nach Anspruch 1, wobei die Wand (18; 118) Flammenausbreitung verhindert, wenn sie 10 Minuten lang 1000 °C ausgesetzt ist.

6. Flexibler thermischer Isolator (10; 110) nach Anspruch 1, wobei die Wand (18; 118) einen elektrischen Isolationswiderstand von 4000 MOhm oder mehr aufweist, bevor und nachdem sie 10 Minuten lang 1000 °C ausgesetzt wurde.

7. Flexibler thermischer Isolator (10; 110) nach Anspruch 1, wobei die Wand (18; 118) eine maximale Dicke von 5 mm aufweist.

8. Flexibler thermischer Isolator (10; 110) nach Anspruch 7, wobei die Wand (18; 118) eine maximale Dicke von 2 mm aufweist.

9. Flexibler thermischer Isolator (10; 110) nach Anspruch 1, wobei die Wand (18; 118) eine Spannungsfestigkeit von 2 kV aufweist, nachdem sie 10 Minuten lang 1000 °C ausgesetzt war.

10. Flexibler thermischer Isolator nach Anspruch 1, wobei das Tuch aus feuerbeständigem Material (20) ein Siliciumdioxidgewebe ist.

11. Flexibler thermischer Isolator nach Anspruch 10, wobei das Siliciumdioxidgewebe ein gewebtes Tuch aus Siliciumdioxid-Multifilamentgarnen ist.

12. Batteriepack (12) eines Elektrofahrzeugs, umfassend:
ein Gehäuse (14);
eine Vielzahl von Zellen (16), die durch das Gehäuse (14) begrenzt ist; und
eine Vielzahl von Verbundwänden (18;118), wobei jede der Verbundwände (18; 118) durch den flexiblen thermischen Isolator (10; 110) nach einem vorhergehenden Anspruch bereitgestellt ist,
wobei die zumindest einigen der Verbundwände (18; 118) benachbarte der Zellen (16) voneinander trennen.

## Revendications

1. Isolant thermique flexible (10 ; 110) pour un bloc-batterie de véhicule électrique (12), l'isolant thermique flexible comprenant une paroi composite (18 ; 118) comprenant une feuille de matériau ignifuge (20) comportant des premier et second côtés opposés (20, 24), **caractérisé en ce que** ladite paroi (18;118) comprend en outre :
une première couche adhésive sensible à la pression (26) liée audit premier côté (22) de ladite feuille de matériau ignifuge (20) ; et
l'une d'une couche de polyéther éther cétone renforcée par un canevas (32) liée audit second côté (24) dudit matériau ignifuge (20), ou d'une couche de caoutchouc de silicone (28) liée audit second côté dudit matériau ignifuge (20).

2. Isolant thermique flexible (110) de la revendication 1, comprenant en outre une seconde couche adhésive sensible à la pression (30) liée à ladite couche de polyéther éther cétone renforcée par un canevas (32).

3. Isolant thermique flexible (110) de la revendication 2, comprenant en outre un film de libération (34) fixé de manière libérable à ladite première couche adhésive sensible à la pression (26), ledit film de libération (34) étant conçu pour être retiré afin d'exposer la première couche adhésive sensible à la pression (26) sous-jacente pour une fixation à une surface du bloc-batterie de véhicule électrique (12).

4. Isolant thermique flexible (110) de la revendication 3, dans lequel ladite première couche adhésive sensible à la pression (26) et ladite seconde couche adhésive sensible à la pression (30) sont un adhésif acrylique sensible à la pression.

5. Isolant thermique flexible (10 ; 110) de la revendication 1, dans lequel ladite paroi (18 ; 118) empêche une propagation de flamme lorsqu'elle est exposée à 1 000 °C pendant 10 minutes.

6. Isolant thermique flexible (10 ; 110) de la revendication 1, dans lequel ladite paroi (18 ; 118) comporte une résistance d'isolation électrique de 4 000 mégaohms ou plus avant et après une exposition à 1 000 °C pendant 10 minutes.

7. Isolant thermique flexible (10 ; 110) de la revendication 1, dans lequel ladite paroi (18 ; 118) comporte une épaisseur maximale de 5 mm.

8. Isolant thermique flexible (10 ; 110) de la revendication 7, dans lequel ladite paroi (18 ; 118) comporte une épaisseur maximale de 2 mm.

9. Isolant thermique flexible (10 ; 110) de la revendication 1, dans lequel ladite paroi (18 ; 118) comporte une résistance diélectrique de 2 kV après une exposition à 1 000 °C pendant 10 minutes.

10. Isolant thermique flexible de la revendication 1, dans lequel ladite feuille de matériau ignifuge (20) est un tissu de silice.

11. Isolant thermique flexible de la revendication 10, dans lequel ledit tissu de silice est une feuille tissée de fils multifilaments de silice.

12. Bloc-batterie de véhicule électrique (12) comprenant :
un boîtier (14) ;
une pluralité de cellules (16) délimitées par ledit boîtier (14) ; et
une pluralité de parois composites (18 ; 118), chacune desdites parois composites (18 ; 118) étant fournie par l'isolant thermique flexible (10 ; 110) d'une quelconque revendication précédente,
dans lequel au moins certaines desdites parois composites (18 ; 118) séparent des cellules adjacentes desdites cellules (16) les unes des autres.
